# FASCICULE DE BREVET EUROPEEN

(11) **EP 3 072 423 B1**
(45) Date de publication et mention de la délivrance du brevet: **21.08.2019**
(21) Numéro de dépôt: 16161745.1
(22) Date de dépôt: 22.03.2016
(51) Int. Cl.: A47J 27/08

(54) **AUTOCUISEUR A BAIONNETTE ET PROCEDE DE FABRICATION AFFERENT**
SCHNELLKOCHTOPF MIT BAJONETTVERSCHLUSS, UND ENTSPRECHENDES HERSTELLUNGSVERFAHREN
PRESSURE COOKER WITH BAYONET AND METHOD FOR MANUFACTURING THE SAME

(30) Priorité: 26.03.2015 FR 1552579
(43) Date de publication de la demande: 28.09.2016
(73) Titulaire: SEB S.A., 69130 Ecully (FR)
(72) Inventeur: CHAMEROY, Eric, 21260 VERONNES (FR); CHAILLARD, Hubert, 52250 LONGEAU (FR)
(74) Mandataire: Weber, Jean-François

(56) Documents cités:
- WO-A2-2013/039332
- CH-A5- 571 335
- GB-A- 657 982
- US-A- 2 660 330

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant au moins :
- une cuve et un couvercle destiné à être verrouillé relativement à la cuve pour former avec cette dernière une enceinte de cuisson apte à monter en pression,
- des moyens de verrouillage à baïonnette formant des première et deuxième séries d'excroissances qui sont solidaires respectivement de l'enveloppe du couvercle et de l'enveloppe de la cuve et qui sont destinées à coopérer ensemble pour assurer le verrouillage du couvercle relativement à la cuve.

La présente invention concerne également un procédé de fabrication d'un appareil de cuisson d'aliments sous pression comportant au moins :
- une cuve et un couvercle destiné à être verrouillé relativement à la cuve pour former avec cette dernière une enceinte de cuisson apte à monter en pression,
- des moyens de verrouillage à baïonnette formant des première et deuxième séries d'excroissances qui sont solidaires respectivement de l'enveloppe du couvercle et de l'enveloppe de la cuve et qui sont destinées à coopérer ensemble pour assurer le verrouillage du couvercle relativement à la cuve.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression.

Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve.

Il existe différents types de moyens de verrouillage bien connus dans l'art antérieur. L'un des systèmes les plus répandus est le système de verrouillage à baïonnette, qui repose sur la mise en oeuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve.

Un tel système de verrouillage à baïonnette donne globalement satisfaction, mais n'en présente pas moins certains inconvénients.

En particulier, il peut s'avérer délicat pour les utilisateurs de positionner correctement le couvercle relativement à la cuve, du fait notamment que la position des rampes de couvercle est difficilement déterminable, surtout pour un utilisateur peu averti. De la même façon, il peut s'avérer difficile pour les utilisateurs de ces autocuiseurs à baïonnette connus de s'assurer du bon engagement mutuel des rampes de cuve et de couvercle. En outre, de par leur conception même, les rampes de cuve et de couvercle présentent une résistance à la déformation, et en particulier à la flexion, qui est loin d'être optimale. Cela impose de recourir à des rampes d'épaisseur importantes qui s'étendent le long du périmètre de la cuve (respectivement le long du périmètre du couvercle) selon des longueurs relativement élevées, de façon à assurer une liaison des rampes de cuve et de couvercle susceptibles de satisfaire aux normes et spécifications particulièrement exigeantes en matière d'autocuiseurs domestiques.

Certaines normes prévoient en particulier qu'un mécanisme de verrouillage d'autocuiseur à baïonnette doit résister à une pression d'épreuve de 500 kPa sans séparation de la cuve et du couvercle. Les systèmes de verrouillage à baïonnette classiques mis en oeuvre dans les autocuiseurs connus reposent donc sur l'utilisation de rampes de couvercle et de cuve de grandes longueurs, ce qui confère à l'autocuiseur un caractère esthétique peu valorisant, du fait notamment de l'aspect relativement déstructuré du bord de cuve, dans lequel sont ménagées des encoches (permettant l'engagement des rampes de couvercle) qui s'étendent sur au moins la moitié du périmètre du bord de cuve.

Les systèmes de verrouillage à baïonnette mis en oeuvre dans les autocuiseurs connus induisent donc nécessairement des conformations et dimensionnements des bords de cuve et de couvercle très spécifiques, qui limitent notamment les possibilités d'accessoirisation des autocuiseurs concernés, et en affectent significativement l'apparence générale. De plus, en raison de la longueur relativement importante des rampes de cuve et de couvercle, il est nécessaire de faire tourner le couvercle relativement à la cuve selon une course angulaire relativement importante pour faire coïncider entièrement toutes les rampes de couvercle avec toutes les rampes de cuve correspondantes et obtenir ainsi un verrouillage efficace et sûr. Cette course angulaire importante peut en outre être difficile à effectuer en raison du frottement entre les rampes de cuve et de couvercle (ainsi que du joint d'étanchéité) qu'elle implique.

En définitive, les systèmes de verrouillage d'autocuiseurs à baïonnette connus ne sont absolument pas optimisés en regard notamment de leur comportement mécanique (résistance mécanique et résistance à la déformation), de leur poids, de leur esthétique, de leur ergonomie et de leur facilité d'utilisation. Concernant spécifiquement ce dernier point (facilité d'utilisation), il s'avère que la capacité des mécanismes de verrouillage à baïonnette connus à suggérer de manière naturelle et intuitive leur propre utilisation (capacité appelée généralement « *affordance* ») est loin d'être optimale.

Le document WO-2013/039332 décrit un appareil de cuisson d'aliments sous pression équipé d'un système de verrouillage à baïonnette. Un autre appareil de cuisson est connu du document CH571335A.

L'invention se propose par conséquent de remédier aux différents inconvénients exposés précédemment et de proposer un nouvel appareil de cuisson sous pression dont le moyen de verrouillage est particulièrement performant, notamment sur le plan de la facilité d'utilisation et de la résistance à la déformation, tout en étant léger, sûr, de manipulation facile et présentant de bonnes propriétés d'affordance ainsi qu'une esthétique améliorée.

Un autre objet de l'invention vise à proposer un nouvel appareil de cuisson sous pression pourvu de moyens de verrouillage qui puisse être fabriqué de manière simple et à moindre coût, tout en étant particulièrement robuste et fiable.

Un autre objet de l'invention vise à proposer un nouvel appareil de cuisson sous pression qui procure un haut niveau de sécurité d'utilisation.

Un autre objet de l'invention vise à proposer un nouvel appareil de cuisson sous pression dont les moyens de verrouillage peuvent être fabriqués au moyen d'un outillage industriel dont le fonctionnement repose sur des principes bien connus et éprouvés.

Un autre objet de l'invention vise à proposer un nouvel appareil de cuisson sous pression dont la conception facilite le positionnement adéquat du couvercle relativement à la cuve.

Un autre objet de l'invention vise à proposer un nouvel appareil de cuisson sous pression dont la conception permet à l'utilisateur de s'assurer facilement et intuitivement du verrouillage correct du couvercle relativement à la cuve.

Un autre objet de l'invention vise à proposer un nouveau procédé de fabrication d'un appareil de cuisson sous pression qui repose sur des étapes particulièrement simples et économiques, tout en permettant d'obtenir un appareil de cuisson dotés de moyens de verrouillage extrêmement efficaces et sûrs.

Un autre objet de l'invention vise à proposer un nouveau procédé de fabrication d'un appareil de cuisson sous pression qui peut être mis en oeuvre au moyen d'outils industriels simples et économiques.

Les objets de l'invention sont atteints à l'aide d'un appareil de cuisson d'aliments sous pression comportant au moins :
- une cuve et un couvercle destiné à être verrouillé relativement à la cuve pour former avec cette dernière une enceinte de cuisson apte à monter en pression,
- des moyens de verrouillage à baïonnette formant des première et deuxième séries d'excroissances qui sont solidaires respectivement de l'enveloppe du couvercle et de l'enveloppe de la cuve et qui sont destinées à coopérer ensemble pour assurer le verrouillage du couvercle relativement à la cuve,
ledit appareil étant caractérisé en ce que chaque excroissance d'au moins l'une .desdites séries est adjacente à une ouverture respective ménagée à travers l'enveloppe correspondante.

Les objets destinés à l'invention sont également atteints à l'aide d'un procédé de fabrication d'un appareil de cuisson d'aliments sous pression comportant au moins :
- une cuve et un couvercle destiné à être verrouillé relativement à la cuve pour former avec cette dernière une enceinte de cuisson apte à monter en pression,
- des moyens de verrouillage à baïonnette formant des première et deuxième séries d'excroissances qui sont solidaires respectivement de l'enveloppe du couvercle et de l'enveloppe de la cuve et qui sont destinées à coopérer ensemble pour assurer le verrouillage du couvercle relativement à la cuve,
ledit procédé étant caractérisé en ce qu'il comprend :
- une étape de réalisation, à travers au moins l'une desdites enveloppes, d'une pluralité d'ouvertures,
- et une étape de formation d'une pluralité d'excroissances chacune adjacentes à une ouverture respective de ladite pluralité d'ouvertures, ladite pluralité d'excroissances formant au moins l'une desdites première et deuxième séries d'excroissances.

D'autres particularités et avantages de l'invention apparaîtront et ressortiront plus en détails à la lecture de la description faite ci-après, en référence aux dessins annexés, donnés à titre d'exemple purement illustratif et non limitatif, dans lesquels :
- La figure 1 illustre, selon une vue en perspective schématique, un premier mode de réalisation d'un appareil de cuisson d'aliments sous pression conforme à l'invention, avec le couvercle séparé de la cuve.
- La figure 2 illustre, selon une vue schématique en perspective, l'appareil de la figure 1 avec le couvercle rapporté et verrouillé sur la cuve.
- La figure 3 illustre, selon une vue en coupe partielle, le couvercle de l'appareil des figures 1 et 2.
- La figure 4 illustre, selon une autre vue en coupe, le couvercle de la figure 3.
- La figure 5 illustre, selon une vue schématique en perspective partiellement de dessous, l'appareil des figures 1 et 2 alors que le couvercle est rapporté sur la cuve, contre le rebord supérieur libre de cette dernière, dans une configuration d'attente de verrouillage.
- La figure 6 illustre, selon une vue incomplète schématique en perspective partiellement de dessous, l'appareil de la figure 1 alors que le couvercle est rapporté et verrouillé sur la cuve.
- Les figures 7 et 8 sont des vues schématiques en coupe, selon deux plans de coupe respectifs, d'un détail de réalisation de l'autocuiseur de la figure 6.
- La figure 9 illustre, selon une vue schématique en coupe, la façon dont le joint d'étanchéité est positionné au sein d'un autocuiseur conforme à l'invention dont le couvercle est verrouillé sur la cuve.
- La figure 10 est une vue en coupe partielle illustrant elle aussi le positionnement du joint d'étanchéité dans le couvercle non verrouillé d'un autocuiseur conforme à l'invention.
- La figure 11 illustre, de façon schématique en vue de face, un exemple de conformation de rampe de couvercle, correspondant à la conformation mise en oeuvre dans l'autocuiseur des figures 1 à 10.
- Les figures 12 et 13 illustrent, de façon schématique en vue de face, des conformations alternatives de rampes de couvercle susceptibles d'être mises en oeuvre à la place, ou en association avec, les rampes de la figure 11.
- La figure 14 illustre, selon une vue de dessous, un appareil similaire à celui des figures précédentes (sauf en ce que ses moyens de verrouillage incluent huit excroissances de couvercle et de cuve et non dix comme dans les variantes des figures précédentes), en configuration de déverrouillage .
- La figure 15 illustre, selon une vue de dessous, l'appareil de la figure 14 en configuration de verrouillage.
- La figure 16 illustre, selon une vue de dessous, l'autocuiseur des figures 14 et 15 avec le couvercle rapporté sur la cuve dans une configuration incorrecte qui ne permet pas le verrouillage.
- La figure 17 illustre, selon une vue générale, un appareil de cuisson conforme à un second mode de réalisation de l'invention, dont le couvercle est verrouillé sur la cuve.
- La figure 18 est une vue agrandie d'un détail de la figure 17.
- La figure 19 illustre l'autocuiseur des figures 17 et 18 avec le couvercle déverrouillé et posé librement sur la cuve.
- La figure 20 illustre, selon une vue partielle de dessous en perspective, le couvercle d'un autocuiseur conforme à un troisième mode de réalisation de l'invention.
- La figure 21 illustre, selon une vue partielle de dessus en perspective, le couvercle de la figure 20.
- La figure 22 illustre, selon une vue partielle de dessous en perspective, le couvercle d'un autocuiseur conforme à un quatrième mode de réalisation de l'invention.
- La figure 23 illustre, selon une vue partielle de dessous en perspective, le couvercle d'un autocuiseur conforme à un cinquème mode de réalisation de l'invention.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels.

L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu.

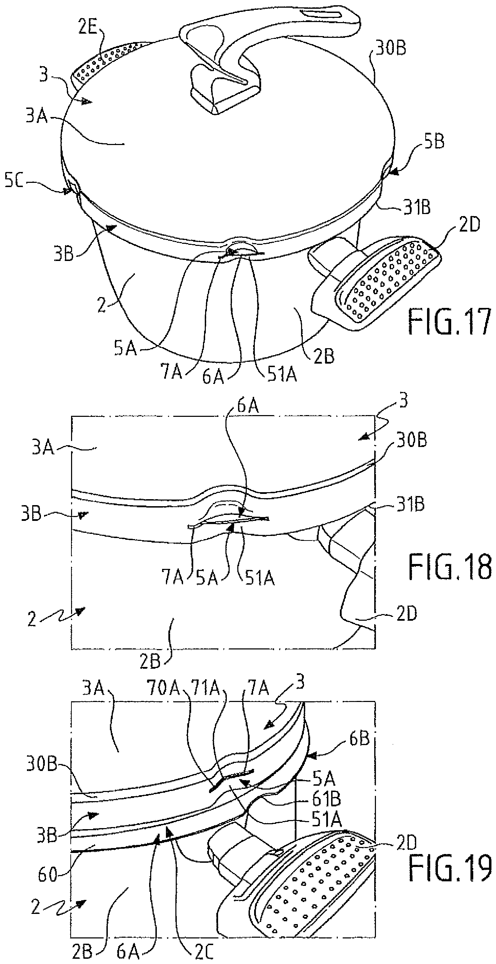

L'appareil de cuisson 1 conforme à l'invention comporte au moins une cuve 2 formant récipient de cuisson, destiné à accueillir les aliments à cuire et présentant en l'espèce sensiblement une symétrie de révolution selon un axe central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium, ou tout autre matériau approprié, revêtu (par exemple d'une couche de céramique, PTFE, émail, laque...) ou non. La cuve 2 comprend un fond 2A, qui est par exemple un fond thermo-conducteur multicouches solidarisé au reste de la cuve 2 par toute technique appropriée (par exemple par frappe à chaud). La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. La cuve 2 peut comporter également des organes de préhension, tels que des poignées de cuve 2D, 2E (cf. figures 17 à 19), préférentiellement au nombre de deux, et fixées par exemple sur la paroi latérale 2B de la cuve 2 de façon diamétralement opposée par rapport à l'axe central X-X'.

L'appareil 1 conforme à l'invention comprend également un couvercle 3 destiné à être associé à la cuve 2, pour former avec cette dernière une enceinte de cuisson. Plus précisément, le couvercle 3 est destiné à être verrouillé relativement à la cuve 2 pour former avec cette dernière une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité, tel qu'un joint annulaire 4 souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur.

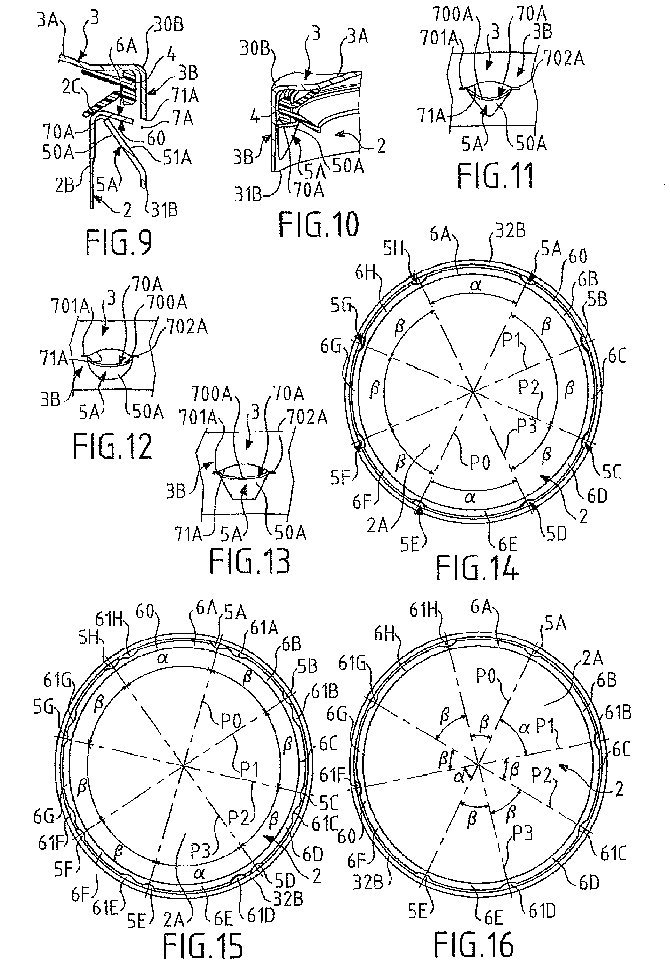

Le couvercle 3 est de manière classique fabriqué à partir d'un matériau métallique tel que l'acier inoxydable ou l'aluminium, ou tout autre matériau approprié, revêtu (par exemple d'une couche de céramique, PTFE, émail, laque...) ou non. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans les modes de réalisation illustrés aux figures, l'enveloppe du couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans les modes de réalisation illustrés aux figures, l'enveloppe du couvercle 3 inclut également une ceinture annulaire 3B, par exemple de forme sensiblement cylindrique ou tronconique, qui s'élève entre un premier bord circulaire 30B solidaire de l'élément de couverture discoïde 3A (en l'espèce au niveau de la périphérie de ce dernier) et un second bord circulaire libre 31B, lequel est par exemple lui-même prolongé par une collerette 32B (absente des variantes illustrées aux figures 9, 10 et 17 à 19). Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X', la collerette 32B terminale s'étendant quant à elle sensiblement horizontalement. Cela n'exclut bien entendu aucunement que l'élément de couverture discoïde 3A puisse être, tel qu'illustré aux figures, légèrement bombé ou incurvé localement, comme cela est bien connu en tant que tel.

Dans les modes de réalisation illustrés aux figures, la ceinture annulaire 3B est formée par un bord tombant qui s'étend vers le bas à partir de la périphérie de l'élément de couverture discoïde 3A. Dans ces modes de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C. Il est cependant tout à fait envisageable que la ceinture annulaire 3B soit plutôt destinée à être insérée au sein de la cuve 2, de façon à être entourée par, et contenue dans, la cuve 2, sans pour autant que l'on sorte du cadre de l'invention.

L'appareil 1 de cuisson d'aliments sous pression conforme à l'invention comprend avantageusement un moyen de régulation de pression (non illustré), comme par exemple une soupape, montée de préférence sur le couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, et qui est de préférence de l'ordre de 100 kPa. Le principe de fonctionnement général d'un tel moyen de régulation de pression est bien connu en tant que tel, de sorte qu'il n'est pas nécessaire de le décrire plus avant ici.

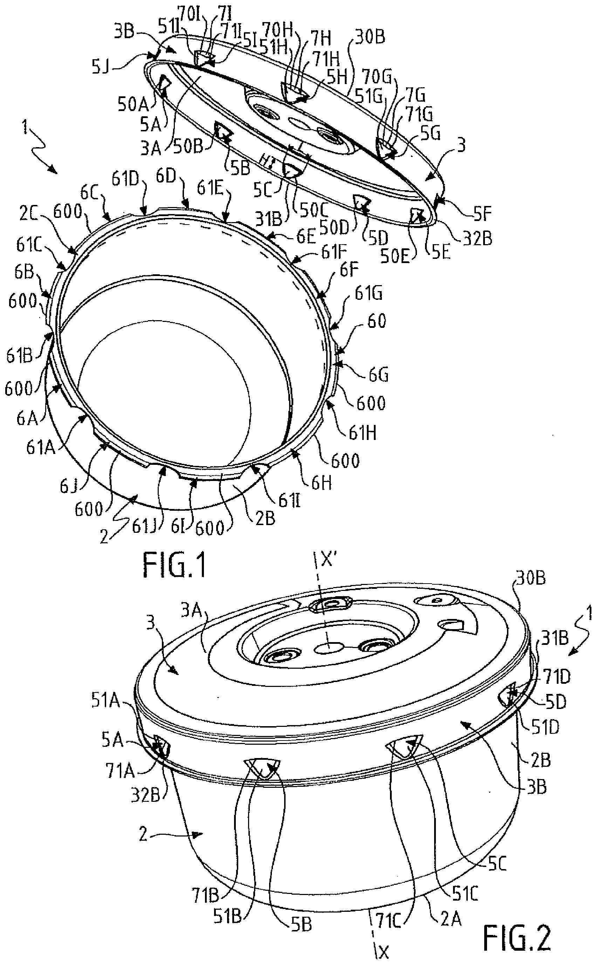

L'appareil 1 de cuisson d'aliments sous pression peut comporter d'autres organes de fonctionnement (par exemple un doigt de sécurité sensible à la pression, une soupape de sécurité à la surpression, etc.) qui ne sont pas illustrés aux figures, lesquelles représentent uniquement des couvercles « *nus »* par souci de simplicité et de concision de description. Les figures 1 et 2 permettent en particulier de visualiser différents orifices ménagés à travers le couvercle 3 et destinés à mettre en communication l'intérieur de l'enceinte de cuisson avec les différents organes de fonctionnement (soupape de fonctionnement, soupape de sécurité, doigt de sécurité...) destinés à être montés sur le couvercle.

La cuve 2 et le couvercle 3 constituent ainsi des enveloppes respectives complémentaires, de préférence métalliques, qui une fois associées forment une enveloppe métallique résultante délimitant un volume fermé au sein duquel les aliments sont destinés à cuire sous pression de vapeur.

L'appareil 1 conforme à l'invention comporte également des moyens de verrouillage du couvercle 3 relativement à la cuve 2, afin de permettre à l'enceinte de cuisson formée par l'association du couvercle 3 et de la cuve 2 d'atteindre au moins la pression de fonctionnement sans risque de voir le couvercle 3 échapper sous l'effet de la pression régnant au sein de l'enceinte. Par « *moyens de verrouillage* » on désigne ici des moyens conçus pour assurer une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson.

Conformément à l'invention, lesdits moyens de verrouillage sont des moyens de verrouillage à baïonnette, c'est-à-dire des moyens de verrouillage permettant d'attacher le couvercle 3 à la cuve 2 par rotation relative du couvercle 3 et de la cuve 2, de préférence selon l'axe central X-X', pour faire ainsi passer le couvercle 3 d'une configuration d'attente de verrouillage, dans laquelle le couvercle est rapporté sur la cuve 2 et repose librement sur cette dernière, à une configuration de verrouillage dans laquelle la cuve 2 et le couvercle 3 interagissent pour empêcher leur libre séparation. Les moyens de verrouillage à baïonnette de l'appareil de cuisson 1 forment à cet effet une première série d'excroissances 5A-5J et une deuxième série d'excroissances 6A-6J qui sont solidaires respectivement de l'enveloppe du couvercle 3 et de l'enveloppe de la cuve 2, et qui sont destinées à coopérer ensemble pour assurer le verrouillage du couvercle 3 relativement à la cuve 2. Comme cela est bien connu en tant que tel, les excroissances 5A-5J, 6A-6J de chaque série sont conçues pour coopérer deux à deux, c'est-à-dire que chaque excroissance de l'une desdites séries est conçue pour être amenée, par rotation du couvercle 3 relativement à la cuve 2, à passer sous une excroissance correspondante de l'autre série. Cette coopération mécanique des excroissances 5A-5J, 6A-6J de chaque série réalise ainsi un interverrouillage qui empêche toute séparation intempestive du couvercle 3 et de la cuve 2, puisqu'en réaction à un effort de séparation du couvercle 3 et de la cuve 2 s'exerçant selon la direction verticale (matérialisée par l'axe central X-X'), les excroissances superposées deux à deux viennent en appui mutuel de blocage.

Dans les modes de réalisation illustrés aux figures, les excroissances 5A-5J de la première série (solidaires de l'enveloppe du couvercle 3) font saillie radialement vers l'intérieur du couvercle 3, tandis que les excroissances 6A-6J de la deuxième série (solidaire de l'enveloppe de la cuve 2) font saillie radialement, à partir de l'enveloppe de la cuve 2, vers l'extérieur de cette dernière. Il est cependant parfaitement envisageable, selon un mode de réalisation alternatif non illustré, que les excroissances 5A-5J de la première série fassent saillie vers l'extérieur du couvercle 3 et que les excroissances 6A-6J de la deuxième série fassent saillie, à partir de ladite enveloppe de la cuve 2, vers le centre de cette dernière. L'invention n'est donc pas limitée à une configuration particulière des rampes de verrouillage, l'essentiel étant que des excroissances de couvercle 5A-5J et de cuve 6A-6J, formant respectivement des rampes de couvercle et de cuve, coopèrent ensemble par mise en rotation relative de la cuve 2 du couvercle 3, en l'espèce selon l'axe X-X', pour que les rampes de couvercle viennent se positionner sous (ou éventuellement sur) les rampes de cuve afin de réaliser une liaison mécanique entre la cuve 2 et le couvercle 3 capable de résister à la pression interne régnant dans l'enceinte de cuisson. Chaque excroissance 5A-5J est avantageusement formée par une pièce métallique pleine, non ajourée.

Conformément à l'invention, chaque excroissance 5A-5J d'au moins l'une desdites séries d'excroissances est adjacente à une ouverture respective 7A-7J ménagée à travers l'enveloppe correspondante (c'est-à-dire l'enveloppe dont sont solidaires les excroissances de la série concernée). Comme illustré aux figures, l'ouverture est une ouverture traversante ménagée à travers toute l'épaisseur de l'enveloppe concernée, et forme ainsi un orifice débouchant.

Par « *adjacente* » on désigne ici le fait que chaque excroissance 5A-5J se trouve au voisinage immédiat de l'ouverture respective 7A-7J, et vient par exemple border et/ou délimiter en partie ladite ouverture 7A-7J. Cela signifie par exemple qu'à chaque excroissance 5A-5J concernée correspond une ouverture 7A-7J qui lui est attenante. Le nombre d'excroissances 5A-5J concernées est donc en l'espèce égal au nombre d'ouvertures 7A-7J adjacentes correspondantes. Avantageusement chaque excroissance 5A-5J est reliée à l'enveloppe correspondante (de couvercle ou de cuve selon le cas) par un bord qui contribue également à délimiter l'ouverture 7A-7J qui lui est respectivement adjacente. Chaque excroissance 5A-5J partage donc, dans ce mode de réalisation illustré aux figures, au moins un bord commun avec l'ouverture respective 7A-7J qui lui est adjacente.

De préférence, conformément au mode de réalisation illustré aux figures, chaque ouverture 7A-7J s'inscrit dans une première surface (par exemple un cylindre dans l'exemple illustré aux figures) tandis que chaque excroissance correspondante 5A-5J s'inscrit dans une surface qui n'est sensiblement pas parallèle à ladite première surface.

Avantageusement, chaque excroissance 5A-5J est reliée à l'enveloppe (de couvercle et/ou de cuve) dont elle est issue par un bord dont une partie au moins est située au-dessus ou au-dessous de l'ouverture adjacente correspondante 7A-7J, de sorte que lesdits bord et ouverture adjacente correspondante 7A-7J sont alignés verticalement, au moins en partie. Dans les modes de réalisation illustrés aux figures, les excroissances 5A-5J adjacentes aux ouvertures respectives 7A-7J forment les excroissances 5A-5J de la première série solidaires de l'enveloppe du couvercle 3. Comme cela sera décrit plus en détails dans ce qui suit, chaque excroissance 5A-5J de la première série d'excroissances est, dans les exemples illustrés aux figures, constituée par une portion déformée localement de l'enveloppe du couvercle 3, formant en l'espèce un élément en volume qui fait saillie radialement vers l'intérieur du couvercle 3, tandis que les excroissances 6A-6J de la deuxième série d'excroissances se présentent par exemple (comme décrit plus en détails dans ce qui suit) sous la forme de languettes métalliques qui s'étendent radialement à partir du bord supérieur libre 2C de la cuve 2, en l'espèce vers l'extérieur de la cuve 2. Il est bien entendu alternativement envisageable que les excroissances 5A-5J solidaires de l'enveloppe du couvercle 3 soient formés par des éléments plats ou en volume qui font saillie vers l'extérieur du couvercle, et que les excroissances 6A-6J solidaires de la cuve 2 soient constituées par des éléments plats ou en volume qui font saillie vers l'intérieur de la cuve 2. L'invention concerne donc toutes les combinaisons possibles d'excroissances (plat/volume, en saillie interne/en saillie externe), dans la mesure où au moins l'une des séries d'excroissances est associée à une pluralité d'ouvertures 7A-7J correspondantes comme décrit précédemment.

Avantageusement, et comme illustré aux figures, les excroissances 6A-6J de la deuxième série sont formées par un rebord annulaire 60 qui déborde vers l'extérieur à partir du bord supérieur libre 2C, des encoches 61A-61J de passage desdites excroissances 5A-5J de la première série étant ménagées à travers ledit rebord annulaire 60, de sorte que les portions dudit rebord annulaire 60 s'étendant entre chaque encoche 61A-61J forment des rampes de cuve destinées à coopérer avec les excroissances 5A-5J de la première série solidaires de l'enveloppe du couvercle 3. Le rebord annulaire 60 se présente ainsi avantageusement sous la forme d'une couronne sensiblement plate, qui s'étend sensiblement horizontalement ou selon une légère inclinaison vers le bas, et au travers de laquelle sont ménagées, par exemple par découpe de la matière formant le rebord annulaire 60, les encoches 61A-61J qui permettent le passage des excroissances 5A-5J de couvercle. Les encoches 61A-61J présentent avantageusement un profil arrondi, conjugué à celui des excroissances 5A-5J de couvercle. Ainsi, lorsque le couvercle 3 vient coiffer la cuve 2, les excroissances 5A-5J qui font saillie de la ceinture annulaire 3B peuvent passer par les encoches 61A-61J pour se retrouver positionnées plus bas que le rebord annulaire 60. Le couvercle 3 se trouve alors dans une configuration de préverrouillage, à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 5A-5J du couvercle 3 et les encoches 61A-61J du rebord annulaire 60, réalisant ainsi un verrouillage de type « à baïonnette ». De préférence, comme cela ressort notamment des figures 1, 7 et 8, le rebord annulaire 60 inclut une collerette qui s'étend sensiblement radialement et vers l'extérieur à partir dudit bord supérieur libre 2C, ainsi qu'une jupe 600 qui s'étend sensiblement vers le bas entre un bord supérieur 600A solidaire de la collerette et un bord inférieur libre 600B contre lequel les excroissances 5A-5J de la première série (formant en l'espèce les rampes de couvercle 3) sont destinées à venir en appui pour verrouiller le couvercle 3 relativement à la cuve 2. Ce mode de réalisation s'avère particulièrement avantageux sur le plan mécanique, car il permet de conférer à la rampe de cuve un moment quadratique particulièrement élevé selon la direction verticale X-X', conduisant ainsi à l'obtention d'une liaison mécanique particulièrement stable et robuste entre la cuve 2 et le couvercle 3.

De préférence, la jupe 600 est discontinue, et n'est pas présente au niveau des encoches 61A-61J, même s'il est tout à fait envisageable, à titre alternatif, que la jupe 600 s'étende continûment sur tout le périmètre du rebord annulaire 60, encoches 61A-61J comprises, sans, pour autant que l'on sorte du cadre de l'invention.

De préférence, comme illustré aux figures, lesdites ouvertures 7A-7J sont localisées sur ladite ceinture annulaire 3A, à distance desdits premier et second bords circulaires 30B, 31B, de sorte que chaque ouverture 7A-7J est sensiblement continûment bordée sur tout son périmètre par la matière formant la ceinture 3B. Le bord délimitant chaque ouverture 7A-7J est donc avantageusement un bord fermé sur lui-même, contrairement par exemple au bord ouvert sur l'extérieur d'une simple encoche. Chacune desdites ouvertures 7A-7J est donc ménagée à travers l'épaisseur de la ceinture annulaire 3B du couvercle 3, et forme en l'espèce une fenêtre traversante obtenue par enlèvement de matière.

Ainsi, chaque excroissance 5A-5J est associée à une ouverture 7A-7J respective qui est ménagée à travers l'enveloppe correspondante (c'est-à-dire en l'espèce l'enveloppe du couvercle 3, et plus précisément la ceinture annulaire 3B) et qui est délimitée par au moins un bord 70A-70J, et de préférence par au moins deux bords opposés (par exemple un premier bord longitudinal 70A-70J et un deuxième bord longitudinal 71A-71J). De préférence, ledit bord 70A-70J contribue également à délimiter ladite excroissance 5A-5J adjacente à ladite ouverture 7A-7J. En d'autres termes, ledit bord 70A-70J est avantageusement commun à l'ouverture 7A-7J et à l'excroissance 5A-5J correspondante, c'est-à-dire qu'il contribue à border ladite ouverture 7A-7J et l'excroissance associée 5A-5J. De façon préférentielle, ledit bord 70A-70J de ladite ouverture 7A-7J forme une face d'appui contre laquelle est destinée à venir en appui une excroissance 6A-6J de l'autre série.

De préférence, ladite excroissance 5A-5J adjacente à l'ouverture 7A-7J est formée par une portion déformée de l'enveloppe correspondante (en l'espèce l'enveloppe du couvercle 3, et plus précisément la ceinture annulaire 3B), ladite portion déformée étant par exemple obtenue par emboutissage de l'enveloppe correspondante. En d'autres termes, la déformation radiale localisée de l'enveloppe formant ladite portion déformée est obtenue par une déformation plastique localisée du matériau formant ladite enveloppe. Le recours à l'emboutissage permet d'obtenir de façon particulièrement simple, rapide et à moindre coût une portion déformée particulièrement rigide et robuste, présentant en particulier d'excellentes propriétés de résistance à la flexion selon la direction verticale.

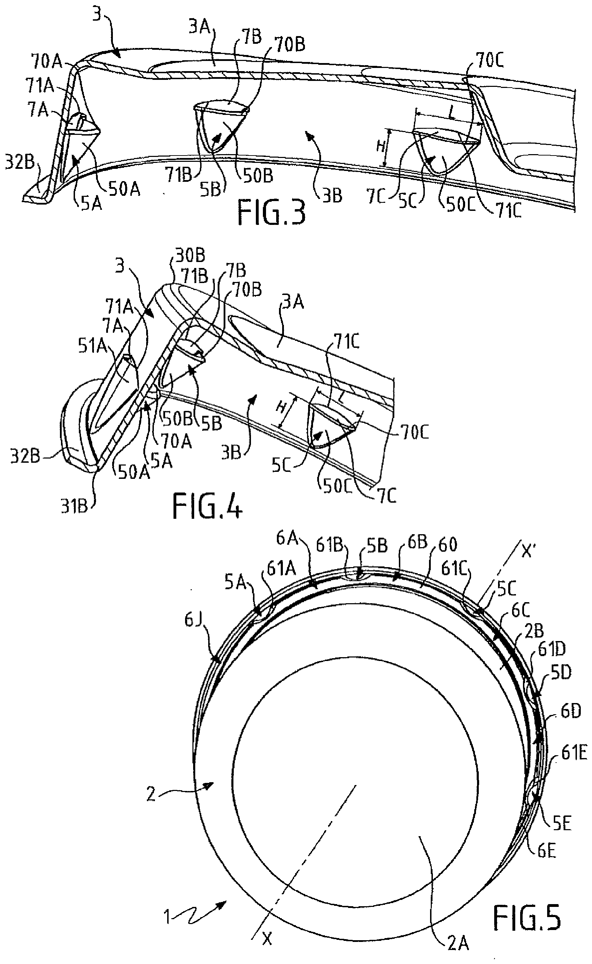

Ledit bord 70A-70J fait avantageusement partie de ladite portion déformée. Cela signifie que la portion d'enveloppe déformée formant l'excroissance 5A-5J concernée est positionnée relativement à ladite ouverture 7A-7J respective de façon qu'au moins une portion dudit bord 70A-70J (en l'espèce le premier bord longitudinal précité, qui correspond au bord inférieur dans les variantes illustrée aux figures 1 à 19) soit déformée radialement (par exemple à l'occasion de l'opération d'emboutissage susvisée) pour présenter un profil courbe et faire ainsi partie de l'excroissance 5A-5J correspondante. Dans les modes de réalisation illustrés aux figures 1 à 16, ladite déformation radiale localisée consiste à repousser le bord inférieur 70A-70J de l'ouverture 7A-7J vers le centre du couvercle 3, de façon à faire ainsi passer le bord 70A-70J d'un profil initial (avant déformation radiale) qui suit la courbure de l'enveloppe du couvercle 3 (c'est-à-dire en l'espèce la courbure de la ceinture annulaire 3B), à un profil incurvé qui s'inscrit avantageusement dans un plan sensiblement horizontal, c'est-à-dire perpendiculaire à l'axe central X-X'. Dans les exemples des figures 1 à 16, ledit bord 70A-70J de l'ouverture 7A-7J forme le sommet de l'excroissance 5A-5J correspondante, et forme de façon encore plus préférentielle une face d'appui contre laquelle est destinée à venir en appui une excroissance de l'autre série (en l'espèce une rampe de cuve correspondante). En d'autres termes, ledit bord 70A-70J de profil courbe est destiné à venir se glisser sous les rampes de cuve 2 pour assurer le verrouillage du couvercle 3 relativement à la cuve 2. De préférence, conformément au mode de réalisation des figures 1 à 16, seul le bord inférieur 70A-70J de l'ouverture 7A-7J est déformé radialement pour présenter un profil courbe, le bord supérieur opposé 71A-71J n'étant quant à lui sensiblement pas déformé et restant donc inscrit dans la continuité de l'enveloppe correspondante (en l'espèce l'enveloppe du couvercle 3, et plus précisément la ceinture annulaire 3B). Il est cependant tout à fait envisageable, comme dans le mode de réalisation des figures 17 à 19, que la déformation radiale localisée destinée à former l'excroissance 5A-5J soit pratiquée de façon à déformer radialement et de façon analogue à la fois le bord inférieur 70A et le bord supérieur 71A de l'ouverture 7A-7J. Dans ce mode de réalisation des figures 17 à 19, les excroissances 6A-6J formant les rampes de verrouillage de la cuve 2 viendront ainsi s'insérer dans l'ouverture, entre les bords inférieur 70A et supérieur 71A de cette dernière (cf. figure 19), le bord inférieur 70A déformé venant en butée contre l'excroissance 6A correspondante pour empêcher la séparation du couvercle 3 et de la cuve 2.

Le recours à un bord 70A-70J d'ouverture déformé radialement pour former la face mécaniquement active des excroissances de verrouillage s'avère particulièrement avantageux, car il permet d'obtenir des excroissances extrêmement rigides et résistante à la flexion, avec un moment quadratique élevé relativement à la direction verticale matérialisée par l'axe central X-X'.

De préférence, la projection orthogonale de chaque ouverture 7A-7J sur un plan radial se présente sous la forme d'une fente allongée sensiblement rectiligne ou cintrée qui s'étend longitudinalement selon une direction globalement horizontale.

Chaque ouverture 7A-7J se présente par exemple (variantes des figures 1 à 19), préalablement à la déformation radiale du bord 70A-70J, sous la forme d'une fente allongée sensiblement droite ou incurvée qui s'inscrit sensiblement dans un plan d'extension moyen perpendiculaire à l'axe central vertical X-X'. De préférence, chaque ouverture 7A-7J est réalisée par enlèvement de matière localisée, par exemple par découpe, de l'enveloppe correspondante du couvercle 3 et/ou de la cuve 2. Dans les modes de réalisation illustrés aux figures 1 à 19, chaque ouverture 7A-7J est ainsi directement découpée dans la ceinture annulaire 3B. Avantageusement, le bord 70A-70J est formé par une portion centrale 700A (cf. figures 11 à 13) encadrée de part et d'autre par deux portions extrémales 701A, 702A, seule ladite portion centrale étant déformée radialement pour présenter un profil courbe et faire ainsi partie de l'excroissance 5A-5J adjacente à l'ouverture 7A-7J, lesdites portions extrémales 701A, 702A ne faisant quant à elles pas partie de ladite excroissance 5A-5J. Dans les exemples des figures 11 à 13, les portions extrémales 701A, 702A suivent ainsi la courbure de la ceinture annulaire 3B, de façon à s'inscrire dans la continuité de cette dernière, au contraire de la portion centrale 700A qui elle fait saillie, en l'espèce vers le centre du couvercle 3, de la ceinture annulaire 3B, pour former une sorte de gousset dont le bord supérieur libre est destiné à venir en appui contre les rampes de cuve pour assurer le verrouillage du couvercle 3 relativement à la cuve 2. En d'autres termes, la déformation radiale visant à former l'excroissance 5A-5J n'est pas pratiquée sur toute la longueur du bord 70A-70J, mais seulement sur une portion centrale de ce dernier (qui forme de préférence l'essentiel dudit bord 70A-70J), afin d'éviter toute déchirure incontrôlée de matière vers les extrémités du bord 70A-70J sous l'effet de l'effort de déformation (par exemple par emboutissage) exercé sur la matière formant l'enveloppe pour former l'excroissance 5A-5J.

De préférence, et comme illustré notamment par les variantes des figures 1 à 19 et 23, ladite excroissance 5A-5J adjacente à ladite ouverture 7A-7J est formée par un élément en volume, c'est-à-dire un élément tridimensionnel qui présente une surface essentiellement non plane, courbe, par exemple gauche. Un tel élément en volume se distingue donc d'une simple languette plate. Ledit élément en volume présente des faces convexe 50A-50J et concave 51A-51J opposées. Dans les modes de réalisation illustrés aux figures 1 à 19, les excroissances adjacentes aux ouvertures 7A-7J respectives forment les excroissances 5A-5J de la première série solidaires du couvercle 3, lesquelles font en l'espèce saillie radialement vers l'intérieur du couvercle 3, de sorte que la face convexe 50A-50J de chaque élément en volume est avantageusement disposée en regard de l'intérieur de l'appareil 1. Ledit élément en volume est avantageusement formé par une déformation radiale localisée de l'enveloppe (de cuve et/ou de couvercle) correspondante. En d'autres termes, chaque élément en volume est avantageusement formé par une déformation volumique locale de la matière constitutive de l'enveloppe de la cuve 2 et/ou du couvercle 3. Chaque élément en volume forme ainsi une protubérance, qui vient de matière avec l'enveloppe concernée (de couvercle et/ou de cuve) et qui fait saillie de ladite enveloppe en définissant d'un côté une face convexe 50A-50J et de l'autre côté, en « *négatif* », une face concave 51A-51J correspondant par exemple à l'empreinte d'application d'un outil de formage. Le recours à de tels éléments en volume pour former la première et/ou la deuxième série d'excroissances des moyens de verrouillage à baïonnette permet d'obtenir aisément, par simple déformation de matière, une excroissance qui présente d'excellentes propriétés mécaniques, et en particulier une résistance à la flexion bien supérieure à celle des languettes métalliques mises en oeuvre dans les moyens de verrouillage à baïonnette des autocuiseurs connus. Le recours à un élément en volume obtenu par déformation radiale localisée de l'enveloppe du couvercle 3 et/ou de la cuve 2 permet en effet d'obtenir une excroissance de verrouillage présentant une section de moment quadratique élevé relativement à l'axe vertical d'application des efforts de verrouillage exercés par l'excroissance correspondante de l'autre série. En outre, tout effet de charnière, particulièrement préjudiciable à la résistance en flexion, est minimisé grâce à la nature tridimensionnelle de l'élément en volume et au fait qu'il vient de matière avec l'enveloppe dont il est issu. Cette continuité de matière (provenant du fait que l'élément en volume est obtenu par une déformation radiale localisée) et le caractère volumique de l'excroissance ainsi obtenue conduisent à l'obtention d'une rampe de verrouillage extrêmement rigide et présentant une résistance élevée à la flexion, même lorsque l'élément en volume est très localisé et ne s'étend pas sur une longueur significative du périmètre de l'enveloppe (du couvercle 3 et/ou de la cuve 2) dont il est issu. L'invention permet en particulier d'obtenir aisément des excroissances 5A-5J de verrouillage présentant un rapport longueur L sur hauteur H inférieur à 4, de préférence inférieur à 3, de façon encore plus préférentielle inférieur à 2.

Grâce à l'invention, il est ainsi possible d'obtenir des excroissances de verrouillage à baïonnettes qui n'ont pas besoin d'être longues, ni d'être fabriquées à partir de tôle épaisse, pour présenter des propriétés mécaniques suffisantes. Cette longueur moindre permet de réduire significativement l'amplitude du déplacement angulaire requis pour faire coopérer ensemble les première et deuxième séries d'excroissances 5A-5J, 6A-6J. Grâce à la dimension réduite des éléments en volume, il est possible de passer de la configuration de pré-verrouillage du couvercle 3 relativement à la cuve 2 à la configuration de verrouillage du couvercle 3 relativement à la cuve 2 par rotation relative du couvercle 3 de la cuve 2 selon un angle relativement faible, par exemple inférieur à 30°, et de façon encore plus préférentielle inférieur à 20°, par exemple de l'ordre de 15°.

De préférence, conformément au mode de réalisation des figures 1 à 16, ladite excroissance 5A-5B adjacente à ladite ouverture 7A-7B est formée par un crevé. L'ouverture 7A-7B peut être par exemple obtenue directement lors de l'emboutissage, par déchirure localisée et contrôlée de la matière formant l'enveloppe sous l'effet de l'opération d'emboutissage, ou au contraire être réalisée préalablement ou postérieurement à l'opération de déformation (par exemple au moyen d'un faisceau laser de découpe ou de tout autre outil de découpe). Chaque excroissance 5A-5J peut être formée par un crevé simple, comme illustré, ou alternativement par un crevé double. Le recours à un crevé s'avère particulièrement avantageux car il permet d'obtenir un élément en volume particulièrement rigide et résistant à la flexion, extrêmement simple, rapide et bon marché à fabriquer.

Comme illustré aux figures 1 à 16 et 23, ladite excroissance 5A-5J adjacente à ladite ouverture 7A-7J est avantageusement formée par une coque délimitée par un bord périphérique dont fait de préférence partie ledit bord 70A-70J de ladite ouverture 7A-7J. Avantageusement, ledit bord périphérique comprend une première portion localisée sur, et attachée à, l'enveloppe correspondante et une deuxième portion (formée par exemple en l'espèce par la portion centrale 700A) libre qui forme une face d'appui contre laquelle est destinée à venir en appui une excroissance 6A-6J de l'autre série. Ainsi, la première portion dudit bord périphérique s'inscrit sur la surface de l'enveloppe dont est issu l'excroissance 5A-5J concernée, tandis que la deuxième portion fait saillie de ladite enveloppe pour former ladite excroissance 5A-5J de verrouillage. Avantageusement, la deuxième portion libre du bord périphérique de la coque formant en l'espèce l'excroissance 5A-5J s'étend sensiblement dans un plan horizontal, perpendiculaire à l'axe central X-X', et s'étend de préférence selon un profil bombé entre deux extrémités localisées sur, et attachées à, l'enveloppe dont est issu l'excroissance 5A-5J concernée (c'est-à-dire, dans les modes de réalisation illustrés aux figures, la ceinture annulaire 3B du couvercle 3). De préférence, ladite première portion du bord périphérique de la coque s'étend au moins en partie selon un profil évasé du bas vers le haut, par exemple un profil sensiblement en V (figure 11) ou en U (figures 12 et 13). Comme illustré aux figures, ladite première portion du bord périphérique de la coque s'étend longitudinalement entre deux extrémités qui correspondent respectivement aux deux extrémités entre lesquelles s'étend longitudinalement la deuxième portion du bord périphérique, formée en l'occurrence par la portion centrale 700A du bord 70A-70J de l'ouverture 7A-7J concernée. Chaque excroissance s'étend ainsi, selon la direction verticale matérialisée par l'axe central X-X', entre un pied et un sommet, ledit sommet étant formé par ladite deuxième portion du bord périphérique de la coque. Avantageusement, ladite première portion est elle-même formée d'au moins deux segments qui convergent l'un vers l'autre du sommet vers le pied.

De préférence, chaque excroissance 5A-5J, de même que chaque ouverture 7A-7J adjacente, est symétrique par rapport à un plan radial médian P0-P3. Plus précisément, dans l'exemple de la figure 11, la première portion du bord périphérique inclut deux portions inclinées en V dont les extrémités inférieures se rejoignent et dont les extrémités supérieures sont reliées par la portion centrale 700A déformée radialement. Dans le mode de réalisation de la figure 12, la première portion du bord périphérique de la coque présente une forme continûment arrondie qui s'étend entre deux extrémités supérieures libres reliées par la portion centrale 700A déformée radialement. Enfin, dans le mode de réalisation de la figure 13, la première portion du bord périphérique de la coque formant l'élément en volume inclut deux tronçons inclinés reliés par un tronçon horizontal, de façon à présenter globalement une forme en « *barque* » dont les extrémités supérieures libres sont reliées entre elles par la portion centrale 700A déformée radialement.

Les excroissances 5A-5J servent également, en particulier lorsqu'elles présentent une forme de gousset en V comme illustré aux figures 1 à 16, de support pour le joint d'étanchéité 4, qui est ainsi retenu par les goussets en question lorsque le couvercle 3 est séparé de la cuve 2, aucun élément supplémentaire de maintien du joint 4 relativement au couvercle 3 n'étant dès lors nécessaire. Le joint d'étanchéité 4, qui est avantageusement un joint à lèvres, et qui présente de préférence une symétrie de révolution, peut en outre être facilement dissocié du couvercle 3, et encore plus facilement être remis en place grâce à la forme « *conique* » des goussets formant les excroissances 5A-5J, forme qui permet au joint 4 de glisser jusqu'à ce qu'il atteigne sa position finale d'appui contre et sur le bord supérieur libre 70A-70J des goussets (cf. figure 10). Le joint 4 est avantageusement conçu pour ne pas pénétrer localement à l'intérieur desdites ouvertures 7A-7J, de sorte que lesdites ouvertures 7A-7J ne forment donc avantageusement pas des ouvertures d'indexation du joint 4 relativement au couvercle 3 et/ou à la cuve 2, ni des ouvertures d'extrusion ou de fluage du joint 4 permettant au joint 4 de faire saillie à travers lesdites ouvertures en cas de surpression anormale.

Bien entendu, l'invention n'est en aucun cas limitée à une forme particulière de bord périphérique, même si une forme sensiblement convergente du haut vers le bas, comme illustré aux figures 11 à 13, s'avère particulièrement avantageuse en facilitant l'auto-positionnement des excroissances 5A-5J dans les encoches 61A-61J correspondantes ménagées à travers le rebord annulaire 60 de la cuve 2.

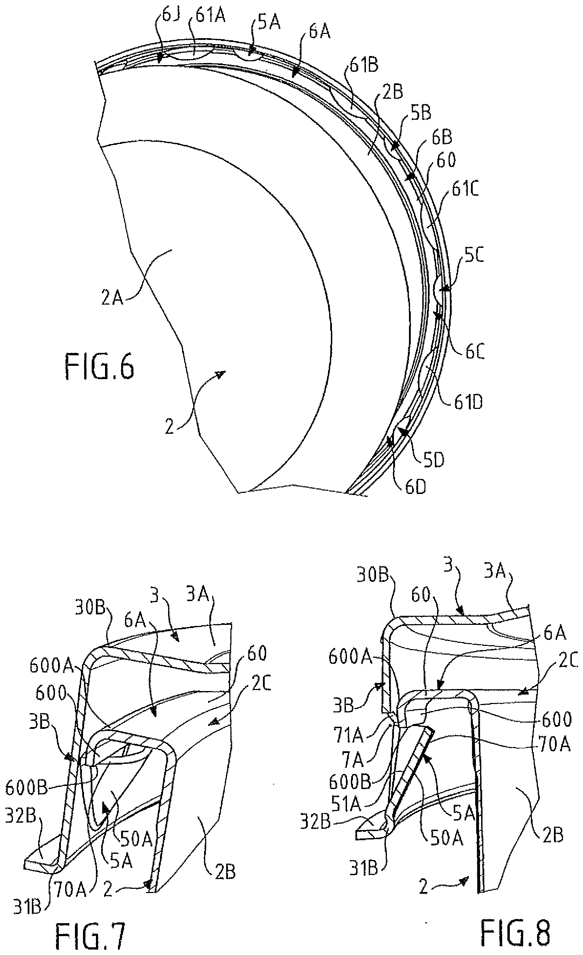

Avantageusement, comme cela ressort en particulier de la figure 8, chaque excroissance 5A-5J présente, en projection sur un plan radial P0-P3, un profil évasé du pied vers le sommet. Ainsi, chaque excroissance 5A-5J se présente avantageusement sous la forme d'un gousset qui converge de haut en bas à la fois dans le plan radial P0-P3 et dans le plan tangentiel (i.e. le plan de la feuille des figures 11 à 13), ce qui permet de faciliter l'auto-positionnement des goussets dans les encoches 61A-61J correspondantes ménagées à travers le rebord annulaire 60 de la cuve 2.

Il est par ailleurs envisageable que les rampes de cuve et de couvercle soient réparties à équidistance angulaire les unes des autres. Toutefois, selon une variante préférée, illustrée aux figures 14 à 16, les excroissances 5A-5J de couvercle (formés en l'espèce par des goussets emboutis), de même que les encoches 61A-61J correspondantes ménagées à travers le rebord annulaire 60 de la cuve 2, sont régulièrement espacés d'un premier angle β, sauf quatre d'entre eux qui sont espacés deux à deux d'un second angle α. Une telle disposition angulaire irrégulière présente le double avantage suivant :
- une fois le couvercle 3 verrouillé relativement à la cuve 2 (figure 15), le second angle α, choisi avantageusement pour être supérieur au premier angle β, créera dans la structure métallique une zone de déformation préférentielle au niveau de laquelle le joint d'étanchéité 4 pourra préférentiellement s'échapper (fluage) en cas de surpression anormale, afin de créer une fuite de vapeur et faire ainsi chuter la pression interne.
- la mise en oeuvre de deux angles différents α et β autorise la mise en place du couvercle 3 uniquement dans deux positions relatives seulement (dont l'une est illustrée à la figure 14), symétriques par rapport à l'axe X-X'. La figure 16 montre en revanche que si les goussets 5A-5J du couvercle 3 ne sont pas présentés dans la position requise relativement aux encoches 61A-61J correspondantes de la cuve 2, alors seuls deux d'entre eux 5A, 5E pourront être présentés au droit d'encoches de la cuve 2, ce qui empêche tout positionnement relatif incorrect de la cuve 2 et du couvercle 3.

Il est cependant parfaitement envisageable, pour favoriser l'équilibre des forces, que les angles α et β soient égaux, auquel cas les goussets 5A-5J sont régulièrement espacés angulairement, ou que tous les goussets 5A-5J soient régulièrement espacés angulairement d'un même angle sauf deux d'entre eux séparés d'un angle différent, de façon à autoriser la mise en place du couvercle 3 uniquement dans une seule position relative. De préférence, dans les modes de réalisation des figures 1 à 16, les excroissances 5A-5J sont localisés sur la ceinture annulaire 3B du couvercle 3 à distance du second bord circulaire libre 31B de ladite ceinture 3B, de manière à ce que la ceinture annulaire 3B forme, en deçà des excroissance 5A-5J, une jupe d'auto-centrage du couvercle 3 relativement à la cuve 2. Cette jupe d'auto-centrage permet, en coopération avec le rebord latéral 60 quasi-continu (à l'exception des encoches 61A-61J) de la cuve 2, au couvercle 3 de se positionner naturellement et spontanément de manière centrée relativement à la cuve 2 lorsqu'il est déposé sur cette dernière.

L'invention concerne par ailleurs en tant que tel un procédé de fabrication d'un appareil 1 de cuisson d'aliments sous pression, et en particulier de fabrication d'un appareil 1 conforme à la description qui précède. Par conséquent, l'ensemble de la description qui précède concernant l'appareil 1 en tant que tel reste parfaitement valable et applicable, *mutatis mutandis,* au procédé de fabrication selon l'invention, et réciproquement.

Le procédé en question est donc un procédé de fabrication d'un appareil 1 de cuisson d'aliments sous pression comportant au moins :
- une cuve 2 et un couvercle 3 destiné à être verrouillé relativement à la cuve 2 pour former avec cette dernière une enceinte de cuisson apte à monter en pression,
- des moyens de verrouillage à baïonnettes formant des première et deuxième séries d'excroissances 5A-5J, 6A-6J qui sont solidaires respectivement de l'enveloppe du couvercle 3 et de l'enveloppe de la cuve 2 et qui sont destinées à coopérer ensemble pour assurer le verrouillage du couvercle 3 relativement à la cuve 2.

Selon l'invention, ledit procédé comprend :
- une étape de réalisation, à travers au moins l'une desdites enveloppes, d'une pluralité d'ouvertures 7A-7J, chaque ouverture 7A-7J étant avantageusement chacune délimitée par au moins un bord 70A-70J respectif,
- et une étape de formation d'une pluralité d'excroissances 5A-5J chacune adjacentes à une ouverture 7A-7J respective de ladite pluralité d'ouvertures, ladite pluralité d'excroissances 5A-5J formant au moins l'une desdites première et deuxième séries d'excroissances.

De préférence, ladite étape de formation de ladite pluralité d'excroissances 5A-5J comprend une opération de formation de chacune desdites excroissances 5A-5J par déformation radiale localisée de l'enveloppe correspondante. Avantageusement, ladite déformation radiale localisée de l'enveloppe est réalisée par emboutissage de la matière constitutive de l'enveloppe. Il est cependant parfaitement envisageable de recourir à toute autre technique de déformation de la matière, comme par exemple la technique d'hydroformage ou la technique de magnétoformage, sans pour autant que l'on sorte du cadre de l'invention.

De préférence, ladite étape de réalisation d'une pluralité d'ouvertures 7A-7J est réalisée par une opération de découpe au laser de l'enveloppe concernée, ce qui permet d'opérer une découpe précise et rapide, étant entendu que d'autres moyens de découpe pourraient éventuellement être mis en oeuvre.

Avantageusement, l'étape de réalisation d'une pluralité d'ouvertures 7A-7J est effectuée avant ladite étape de formation de ladite pluralité d'excroissances 5A-5J, ce qui permet avantageusement d'utiliser les bords de chaque ouverture 7A-7J pour former, par déformation de la matière constitutive de l'enveloppe au voisinage de l'ouverture, chacune desdites excroissances 5A-5J, par exemple par emboutissage ou pliage. La présence de l'ouverture 7A-7J facilite l'emboutissage et permet d'utiliser une partie du bord 70A-70J pour former une surface d'appui particulièrement rigide destiné à interagir avec une excroissance de l'autre série pour verrouiller le couvercle 3 relativement à la cuve 2. Ainsi, dans ce mode de réalisation particulièrement avantageux illustré notamment aux figures 1 à 16, ladite étape de formation de ladite pluralité d'excroissances 5A-5J inclut une étape de déformation radiale de chacun desdits bords 70A-70J afin que lesdits bords 70A-70J fassent chacun partie de l'une desdites excroissances 5A-5J, comme décrit en détails précédemment.

Dans le mode de réalisation particulièrement avantageux illustré aux figures 1 à 16, le procédé comprend tout d'abord une étape d'emboutissage d'un flan métallique discoïde, afin d'obtenir un élément de couvercle en forme de coupelle avec un élément de couverture discoïde 3A prolongé à sa périphérie par un bord tombant formant une ceinture annulaire 3B. L'élément de couvercle ainsi obtenu est ensuite soumis à des opérations de découpe, visant à ménager, à travers la ceinture annulaire 3B, des fentes étroites correspondant aux ouvertures précitées, espacées les unes des autres le long de la circonférence de la ceinture 3B. De préférence, les fentes sont légèrement cintrées pour qu'à l'issue de l'opération ultérieure de déformation radiale localisée de la ceinture annulaire 3B, destinée à former l'excroissance 5A-5J, le bord 70A-70J déformé radialement s'inscrive dans un plan sensiblement horizontal, et forme ainsi une face d'appui sensiblement horizontale et plane. De préférence, l'étape de découpe en question est réalisée en attachant l'élément de couvercle à un mandrin rotatif afin de présenter successivement différents secteurs angulaires de la ceinture annulaire 3B du couvercle 3 à un faisceau laser de découpe, qui réalise des traits de coupe formant des fentes par l'extérieur de la ceinture annulaire 3B. Puis, une fois les fentes ainsi réalisées, des éléments en volume sont formés en repoussant le bord inférieur 70A-70J de chaque fente vers l'intérieur du couvercle 3, par exemple par emboutissage de la matière située au niveau dudit bord 70A-70J et sous ce dernier, en vue d'obtenir une série de « *goussets* » de verrouillage faisant saillie de la face interne de la ceinture annulaire 3B et formant lesdites excroissances 5A-5J.

Selon un exemple alternatif de procédé de fabrication selon l'invention, il est également possible de réaliser les ouvertures (là encore par exemple sous la forme de fentes cintrées) sur une bande métallique plate, puis de réaliser, sur cette bande métallique plate, les excroissances 5A-5J en emboutissant ladite bande métallique plate au niveau de chaque ouverture 7A-7J pour en déformer le bord inférieur 70A-70J, et ainsi obtenir une bande métallique plate à partir de laquelle font saillie des goussets semblables à ceux décrits précédemment, goussets qui viennent de matière avec la bande métallique plate. Le procédé comporte alors dans ce cas une étape ultérieure de cintrage de la bande métallique pourvue de goussets, afin d'obtenir une ceinture annulaire pourvue de goussets faisant saillie de sa face intérieure. Ensuite, le procédé comporte dans ce cas une opération d'assemblage (par exemple par soudure) de la ceinture munie de goussets ainsi obtenue à un élément de fermeture discoïde, afin d'obtenir un sous-ensemble de couvercle complet. Selon encore une autre possibilité, la ceinture discoïde munie de goussets pourrait être rapportée sur la face intérieure d'une ceinture externe annulaire elle-même déjà solidaire d'un élément de fermeture discoïde.

S'agissant par ailleurs du mode de réalisation des figures 17 à 19, le procédé de fabrication correspondant se caractérise cette fois par le fait que l'étape de réalisation de l'ouverture 7A-7J peut éventuellement être effectuée après l'étape de formation de l'excroissance 5A-5J associée. Par exemple, pour obtenir l'autocuiseur des figures 17 à 19, un élément de couvercle métallique est tout d'abord fabriqué par emboutissage d'un flan métallique discoïde afin d'obtenir un élément de couvercle comportant un élément de couverture 3A discoïde qui se prolonge à sa périphérie par une ceinture annulaire 3B. La ceinture annulaire 3B en question est ensuite soumise à des opérations d'emboutissage visant à déformer localement la ceinture annulaire 3B, de préférence sur toute sa hauteur, pour former des excroissances radiales dirigées vers le centre du couvercle 3. Ces excroissances radiales sont ensuite découpées de façon à être munies d'une fente horizontale destinée à permettre le passage et la capture du rebord annulaire 60, comme illustré aux figures. Il est également possible, selon un mode de réalisation alternatif, de découper tout d'abord la ceinture annulaire 3B puis de l'emboutir pour obtenir l'autocuiseur des figures 17 à 19.

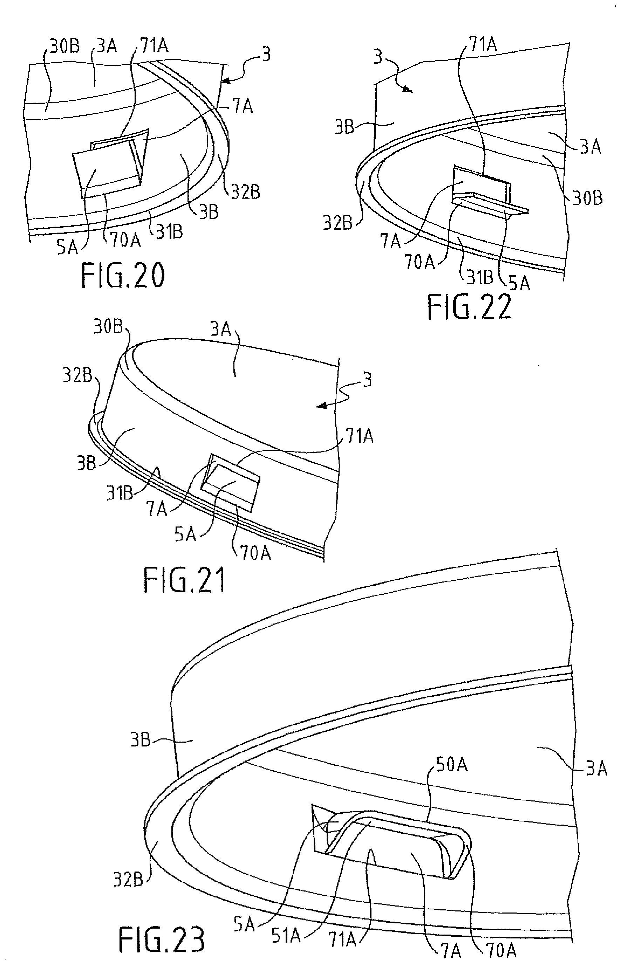

Il est par ailleurs parfaitement envisageable de recourir à des excroissances 5A-5J qui ne sont pas formées par des éléments volumiques. Par exemple, dans les modes de réalisation des figures 20 à 22, chaque excroissance 5A-5J se présente sous la forme d'un volet plat reliée au reste de l'enveloppe par l'un des bords 70A-70J de l'ouverture 7A-7J correspondante. Dans ce cas de figure, une découpe selon un profil globalement en forme de U (en l'espèce renversé) est ménagé à travers l'enveloppe (ici la ceinture annulaire 3B) afin de délimiter un volet qui est par exemple de forme sensiblement rectangulaire et rattaché au reste de l'enveloppe par l'un de ses côtés (en l'espèce le grand côté inférieur). Une poussée radiale centripète est ensuite exercée sur le volet en question pour le replier vers l'intérieur par rotation autour de son côté inférieur le rattachant au reste de l'enveloppe. Cela permet de former simultanément l'excroissance 5A-5J et l'ouverture correspondante 7A-7J, laquelle est délimitée notamment par un bord inférieur 70A-70J sensiblement rectiligne qui forme également le bord inférieur du volet. Ce dernier peut être incliné relativement au plan horizontal selon un angle sensiblement nul (figure 22) ou inférieur à 90° (par exemple de l'ordre de 45° - figures 20 et 21).

Dans l'exemple de la figure 23, les excroissances 5A-5J présentent cette fois un caractère volumique et sont obtenues sensiblement selon le même principe que les goussets des figures 1 à 16, sauf que la surface d'appui et d'interverrouillage destinée à venir au contact des excroissances 6A-6J de l'autre série n'est pas directement formée par le bord 70A mais par la surface convexe 50A de l'élément en volume embouti.

La cuve 2 est quant à elle fabriquée par exemple par emboutissage d'un flan métallique, permettant d'obtenir un élément de cuve cylindrique pourvu à son bord supérieur libre 2C d'une collerette qui s'étend radialement vers l'extérieur. Ladite collerette est ensuite découpée pour former des encoches 61A-61J de passage des excroissances 5A-5J de verrouillage du couvercle 3.

En définitive, l'invention permet, en particulier dans le mode de réalisation préférentiel des figures 1 à 16, d'obtenir facilement et à coût réduit un système de verrouillage à baïonnette particulièrement robuste et efficace, en optimisant la quantité de matière requise, grâce à la mise en oeuvre d'épaisseurs de métal réduites. L'invention permet ainsi, dans le mode de réalisation des figures 1 à 16, de fabriquer un couvercle 3 métallique à partir d'un flan d'épaisseur inférieure à 1 mm, et par exemple comprise entre 0,6 et 1 mm, plus préférentiellement de l'ordre de 0,9 mm. De la même façon, la cuve 2, avec son rebord annulaire 60, peut être fabriquée par formage d'un flan métallique d'épaisseur initiale inférieure à 1 mm, par exemple de l'ordre de 0,8 ou 0,9 mm, étant entendu que la mise en oeuvre de certaines techniques de formage (emboutissage, étirage...) peut conduire la paroi latérale 2B de la cuve 2 à présenter une épaisseur inférieure à l'épaisseur initiale du flan et le rebord latéral 60 à présenter une épaisseur supérieure à l'épaisseur initiale du flan. La mise en oeuvre d'autres techniques de formage (hydroformage, fluotournage...) pourrait conduire à des évolutions d'épaisseur différentes.

L'autocuiseur selon l'invention présente donc un poids significativement inférieur à celui des autocuiseurs à baïonnette de l'art antérieur.

Non seulement la présence d'ouvertures 7A-7J ménagées à travers le couvercle 3 permet à l'utilisateur de connaître en un coup d'oeil le positionnement des rampes de couvercle, et de pouvoir éventuellement visualiser directement l'engagement mutuel des rampes de cuve et de couvercle, mais elle permet également de faciliter l'obtention de rampes de verrouillage présentant un comportement mécanique remarquable, par simple déformation de matière au voisinage d'une ouverture.

L'invention permet en outre d'obtenir des moyens de verrouillage dont les composants viennent directement de matière avec la cuve 2 et le couvercle 3, sans nécessité d'utiliser des pièces rapportées telles qu'un étrier, des oreilles, des mâchoires ou des segments.

L'invention trouve son application industrielle dans la conception, la fabrication et l'utilisation d'appareils de cuisson d'aliments sous pression.

## Revendications

1. Appareil (1) de cuisson d'aliments sous pression comportant au moins :
- une cuve (2) et un couvercle (3) destiné à être verrouillé relativement à la cuve (2) pour former avec cette dernière une enceinte de cuisson apte à monter en pression,
- des moyens de verrouillage à baïonnette formant des première et deuxième séries d'excroissances (5A - 5J, 6A - 6J) qui sont solidaires respectivement de l'enveloppe du couvercle (3) et de l'enveloppe de la cuve (2) et qui sont destinées à coopérer ensemble pour assurer le verrouillage du couvercle (3) relativement à la cuve (2),
ledit appareil (1) étant **caractérisé en ce que** chaque excroissance (5A - 5J) d'au moins l'une desdites séries est adjacente à une ouverture (7A - 7J) respective ménagée à travers l'enveloppe correspondante.

2. Appareil (1) selon la revendication 1 **caractérisé en ce que** ladite ouverture est délimitée par au moins un bord (70A) qui contribue également à délimiter ladite excroissance (5A - 5J) adjacente à ladite ouverture (7A - 7J).

3. Appareil (1) selon la revendication 2 **caractérisé en ce que** ledit bord (70A - 70J) de ladite ouverture forme une face d'appui contre laquelle est destinée à venir en appui une excroissance (6A - 6J) de l'autre série.

4. Appareil (1) selon l'une des revendications 1 à 3 **caractérisé en ce que** ladite excroissance (5A - 5J) adjacente à ladite ouverture (7A - 7J) est formée par une portion déformée de l'enveloppe correspondante.

5. Appareil (1) selon les revendications 2 et 4 **caractérisé en ce que** ledit bord (70A - 70J) de ladite ouverture (7A - 7J) fait partie de ladite portion déformée.

6. Appareil (1) selon la revendication 4 ou 5 **caractérisé en ce que** ladite portion déformée est obtenue par emboutissage de l'enveloppe correspondante.

7. Appareil (1) selon la revendication 2, 3 ou 5 **caractérisé en ce que** ladite excroissance adjacente (5A - 5J) à ladite ouverture (7A - 7J) est formée par une coque délimitée par un bord périphérique dont fait partie ledit bord (70A - 70J) de ladite ouverture (7A - 7J), ledit bord périphérique comprenant de préférence :
- une première portion localisée sur, et attachée à, l'enveloppe correspondante ;
- et une deuxième portion libre qui forme une face d'appui contre laquelle est destinée à venir en appui une excroissance (6A - 6J) de l'autre série, ladite deuxième portion libre s'étendant de préférence sensiblement dans un plan horizontal.

8. Appareil (1) selon l'une des revendications 1 à 7 **caractérisé en ce que** ladite excroissance (5A - 5J) adjacente à ladite ouverture (7A - 7J) est formée par un crevé.

9. Appareil (1) selon l'une des revendications précédentes **caractérisé en ce que** lesdites excroissances adjacentes aux ouvertures (7A - 7J) respectives forment les excroissances (5A - 5J) de la première série solidaires de l'enveloppe du couvercle (3).

10. Appareil (1) selon la revendication 9 **caractérisé en ce que** l'enveloppe du couvercle (3) inclut un élément de couverture discoïde (3A) ainsi qu'une ceinture annulaire (3B) qui s'élève entre un premier bord circulaire (30B) solidaire de l'élément de couverture discoïde (3A) et un second bord circulaire (31B) libre, lesdites ouvertures (7A - 7J) étant localisées sur ladite ceinture (3B) , à distance desdits premier et second bords circulaires (30B - 31B).

11. Procédé de fabrication d'un appareil (1) de cuisson d'aliments sous pression comportant au moins :
- une cuve (2) et un couvercle (3) destiné à être verrouillé relativement à la cuve (2) pour former avec cette dernière une enceinte de cuisson apte à monter en pression,
- des moyens de verrouillage à baïonnette formant des première et deuxième séries d'excroissances (5A - 5J, 6A - 6J) qui sont solidaires respectivement de l'enveloppe du couvercle et de l'enveloppe de la cuve et qui sont destinées à coopérer ensemble pour assurer le verrouillage du couvercle (3) relativement à la cuve (2),
ledit procédé étant **caractérisé en ce qu'**il comprend :
- une étape de réalisation, à travers au moins l'une desdites enveloppes, d'une pluralité d'ouvertures (7A - 7J),
- et une étape de formation d'une pluralité d'excroissances (5A - 5J) chacune adjacentes à une ouverture respective de ladite pluralité d'ouvertures, ladite pluralité d'excroissances (5A - 5J) formant au moins l'une desdites première et deuxième séries d'excroissances.

12. Procédé selon la revendication 11 **caractérisé en ce que** ladite étape de formation de ladite pluralité d'excroissances (5A - 5J) comprend une opération de formation de chacune desdites excroissances par déformation radiale localisée de l'enveloppe correspondante, ladite déformation radiale localisée de l'enveloppe étant de préférence réalisée par emboutissage de la matière constitutive de l'enveloppe.

13. Procédé selon l'une quelconque des revendications 11 et 12 **caractérisé en ce que** ladite étape de réalisation d'une pluralité d'ouvertures (7A - 7J) est effectuée avant ladite étape de formation de ladite pluralité d'excroissances (5A - 5J).

14. Procédé selon l'une des revendications 11 à 13 **caractérisé en ce que** chaque ouverture (7A - 7J) de ladite pluralité d'ouvertures est délimitée par au moins un bord (70A - 70J) respectif, ladite étape de formation de ladite pluralité d'excroissances (5A - 5J) incluant une étape de déformation radiale de chacun desdits bords (70A - 70J) afin que lesdits bords (70A - 70J) fassent chacun partie de l'une desdites excroissances (5A - 5J).

15. Procédé selon l'une des revendications 11 à 14 **caractérisé en ce que** ladite étape de réalisation d'une pluralité d'ouvertures (7A - 7J) est réalisée par une opération de découpe au laser de l'enveloppe concernée.

## Patentansprüche

1. Gerät (1) zum Garen von Nahrungsmitteln unter Druck, umfassend mindestens:
- einen Behälter (2) und einen Deckel (3), der dazu bestimmt ist, relativ zu dem Behälter (2) verriegelt zu werden, um mit diesem Letzteren einen Garraum zu bilden, der geeignet ist, mit Druck beaufschlagt zu werden,
- Bajonettverriegelungsmittel, die eine erste und eine zweite Reihe von Vorsprüngen (5A - 5J, 6A - 6J) bilden, die jeweils mit der Hülle des Deckels (3) und der Hülle des Behälters (2) fest verbunden sind und die dazu bestimmt sind, zusammenwirken, um das Verriegeln des Deckels (3) relativ zu dem Behälter (2) zu gewährleisten,
wobei das Gerät (1) **dadurch gekennzeichnet ist, dass** jeder Vorsprung (5A - 5J) von mindestens einer der Reihen benachbart zu einer jeweiligen Öffnung (7A - 7J) ist, die durch die entsprechende Hülle hindurch ausgebildet ist.

2. Gerät (1) nach Anspruch 1, **dadurch gekennzeichnet, dass** die Öffnung durch mindestens einen Rand (70A) begrenzt ist, der ebenfalls dazu beiträgt, den Vorsprung (5A - 5J) zu begrenzen, der zu der Öffnung (7A - 7J) benachbart ist.

3. Gerät (1) nach Anspruch 2, **dadurch gekennzeichnet, dass** der Rand (70A - 70J) der Öffnung eine Anlagefläche bildet, gegen die ein Vorsprung (6A - 6J) der anderen Reihe bestimmt ist, in Anlage zu kommen.

4. Gerät (1) nach einem der Ansprüche 1 bis 3, **dadurch gekennzeichnet, dass** der Vorsprung (5A - 5J), der zu der Öffnung (7A - 7J) benachbart ist, aus einem verformten Abschnitt der entsprechenden Hülle gebildet ist.

5. Gerät (1) nach den Ansprüchen 2 und 4, **dadurch gekennzeichnet, dass** der Rand (70A - 70J) der Öffnung (7A - 7J) Teil des verformten Abschnitts ist.

6. Gerät (1) nach den Ansprüchen 4 oder 5, **dadurch gekennzeichnet, dass** der verformte Abschnitt durch Tiefziehen der entsprechenden Hülle erhalten ist.

7. Gerät (1) nach Anspruch 2, 3 oder 5, **dadurch gekennzeichnet, dass** der Vorsprung (5A - 5J), der zu der Öffnung (7A - 7J) benachbart ist, aus einer Schale gebildet ist, die durch einen Umfangsrand begrenzt ist, der Teil des Randes (70A - 70J) der Öffnung (7A - 7J) ist, wobei der Umfangsrand vorzugsweise aufweist:
- einen ersten Abschnitt, der auf der entsprechenden Hülle angeordnet und daran befestigt ist,
- und einen zweiten freien Abschnitt, der eine Anlagefläche bildet, gegen die ein Vorsprung (6A - 6J) der anderen Reihe bestimmt ist, in Anlage zu kommen, wobei sich der freie Abschnitt vorzugsweise im Wesentlichen in einer horizontalen Ebene erstreckt.

8. Gerät (1) nach einem der Ansprüche 1 bis 7, **dadurch gekennzeichnet, dass** der Vorsprung (5A - 5J), der zu der Öffnung (7A - 7J) benachbart ist, aus einem Kragen gebildet ist.

9. Gerät (1) nach einem der vorhergehenden Ansprüche, **dadurch gekennzeichnet dass** die Vorsprünge, die zu den jeweiligen Öffnungen (7A - 7J) benachbart sind, die Vorsprünge (5A - 5J) der ersten Reihe bilden, die mit der Hülle des Deckels (3) fest verbunden sind.

10. Gerät (1) nach Anspruch 9, **dadurch gekennzeichnet, dass** die Hülle des Deckels (3) ein scheibenförmiges Abdeckelement (3A) und einen ringförmigen Gürtel (3B) aufweist, der sich zwischen einem ersten kreisförmigen Rand (30B), der mit dem scheibenförmiges Abdeckelement (3A) fest verbunden ist, und einem zweiten freien kreisförmigen Rand (31B) erhebt, wobei die Öffnungen (7A - 7J) auf dem Gürtel (3B) beabstandet von dem ersten und dem zweiten kreisförmigen Rand (30B - 31B) angeordnet sind.

11. Verfahren zur Herstellung eines Geräts (1) zum Garen von Nahrungsmitteln unter Druck, umfassend mindestens:
- einen Behälter (2) und einen Deckel (3), der dazu bestimmt ist, relativ zu dem Behälter (2) verriegelt zu werden, um mit diesem Letzteren einen Garraum zu bilden, der geeignet ist, mit Druck beaufschlagt zu werden,
- Bajonettverriegelungsmittel, die eine erste und eine zweite Reihe von Vorsprüngen (5A - 5J, 6A - 6J) bilden, die jeweils mit der Hülle des Deckels und der Hülle des Behälters fest verbunden sind und die dazu bestimmt sind, zusammenwirken, um das Verriegeln des Deckels (3) relativ zu dem Behälter (2) zu gewährleisten,
wobei das Verfahren **dadurch gekennzeichnet ist, dass** es aufweist:
- einen Schritt des Ausbildens von mehreren Öffnungen (7A - 7J) durch mindestens eine der Hüllen hindurch
- und einen Schritt des Bildens von mehreren Vorsprüngen (5A - 5J), die jeweils zu einer jeweiligen Öffnung der mehreren Öffnungen benachbart sind, wobei die mehreren Vorsprünge (5A - 5J) mindestens eine der ersten und der zweiten Reihe von Vorsprüngen bilden.

12. Verfahren nach Anspruch 11, **dadurch gekennzeichnet, dass** der Schritt des Bildens der mehreren Vorsprünge (5A - 5J) einen Vorgang des Bildens von jedem der Vorsprünge durch lokalisiertes radiales Verformen der entsprechenden Hülle aufweist, wobei das lokalisierte radiale Verformen der Hülle vorzugsweise durch Tiefziehen des Materials, aus dem die Hülle besteht, durchgeführt wird.

13. Verfahren nach einem der Ansprüche 11 und 12, **dadurch gekennzeichnet, dass** der Schritt des Ausbildens von mehreren Öffnungen (7A - 7J) vor dem Schritt des Bildens der mehreren Vorsprünge (5A - 5J) durchgeführt wird.

14. Verfahren nach einem der Ansprüche 11 bis 13, **dadurch gekennzeichnet, dass** jede Öffnung (7A - 7J) der mehreren Öffnungen durch mindestens einen jeweiligen Rand (70A - 70J) begrenzt ist, wobei der Schritt des Bildens der mehreren Vorsprünge (5A - 5J) einen Schritt des radialen Verformens von jedem der Ränder (70A - 70J) aufweist, damit die Ränder (70A - 70J) jeweils Teil von einem der Vorsprünge (5A - 5J) sind.

15. Verfahren nach einem der Ansprüche 11 bis 14, **dadurch gekennzeichnet, dass** der Schritt des Ausbildens von mehreren Öffnungen (7A - 7J) durch einen Vorgang des Laserschneidens der betreffenden Hülle durchgeführt wird.

## Claims

1. An appliance (1) for cooking food under pressure and comprising at least:
- a vessel (2) and a lid (3) for locking relative to the vessel (2) to co-operate therewith to form a cooking enclosure suitable for rising in pressure;
- bayonet locking means forming first and second series of projections (5A-5J, 6A-6J) that are secured respectively to the shell of the lid (3) and to the shell of the vessel (2) and that are for co-operating with one another in order to lock the lid (3) relative to the vessel (2);
said appliance (1) being **characterized in that** each projection (5A-5J) of at least one of said series is adjacent to a respective opening (7A-7J) formed through the corresponding shell.

2. An appliance (1) according to claim 1, **characterized in that** said opening is defined by at least one edge (70A) that also contributes to defining said projection (5A-5J) adjacent to said opening (7A-7J).

3. An appliance (1) according to claim 2, **characterized in that** said edge (70A-70J) of said opening forms a bearing face against which a projection (6A-6J) of the other series is to come to bear.

4. An appliance (1) according to any one of claims 1 to 3, **characterized in that** said projection (5A-5J) adjacent to said opening (7A-7J) is formed by a deformed portion of the corresponding shell.

5. An appliance (1) according to claims 2 and 4, **characterized in that** said edge (70A-70J) of said opening (7A-7J) forms part of said deformed portion.

6. An appliance (1) according to claim 4 or claim 5, **characterized in that** said deformed portion is obtained by die-stamping the corresponding shell.

7. An appliance (1) according to any one of claims 2, 3, and 5, **characterized in that** said projection (5A-5J) adjacent to said opening (7A-7J) is formed by a blister defined by a peripheral edge forming part of said edge (70A-70J) of said opening (7A-7J), said peripheral edge comprising preferably:
- a first portion localized on and attached to the corresponding shell,
- and a second portion that is free and forms a bearing face against which a projection (6A-6J) of the other series is to come to bear, said free second portion lying preferably substantially in a horizontal plane.

8. An appliance (1) according to any one of claims 1 to 7, **characterized in that** said projection (5A-5J) adjacent to said opening (7A-7J) is formed by lancing.

9. An appliance (1) according to any preceding claim, **characterized in that** said projections adjacent of the respective openings (7A-7J) form the projections (5A-5J) of the first series that are secured to the shell of the lid (3).

10. An appliance (1) according to claim 9, **characterized in that** the shell of the lid (3) includes a disk-shaped cover element (3A) together with an annular belt (3B) that extends between a first circular edge (30B) secured to the disk-shaped cover element (30A) and a second annular edge (31B) that is free, said openings (7A-7J) being located in said belt (3B), at a distance from said first and second circular edges (30B-31B).

11. A method of fabricating an appliance (1) for cooking food under pressure and comprising at least:
- a vessel (2) and a lid (3) for locking relative to the vessel (2) to co-operate therewith to form a cooking enclosure suitable for rising in pressure;
- bayonet locking means forming first and second series of projections (5A-5J, 6A-6J) that are secured respectively to the shell of the lid and to the shell of the vessel and that are for co-operating with one another in order to lock the lid (3) relative to the vessel (2);
said method being **characterized in that** it comprises:
- a step of forming a plurality of openings (7A-7J) through at least one of said shells;
- a step of forming a plurality of projections (5A-5J) each adjacent to a respective opening of said plurality of openings, said plurality of projections (5A-5J) forming at least one of said first and second series of projections.

12. A method according to claim 11, **characterized in that** said step of forming said plurality of projections (5A-5J) comprises an operation of forming each of said projections by localized radial deformation of the corresponding shell, said localized radial deformation of the shell being performed by die-stamping the material constituting the shell.

13. A method according to any one of claims 11 and 12, **characterized in that** said step of making a plurality of openings (7A-7J) is performed before said step of forming said plurality of projections (5A-5J).

14. A method according to any one of claims 11 to 13, **characterized in that** each opening (7A-7J) of said plurality of openings is defined by at least one respective edge (70A-70J), said step of forming said plurality of projections (5A-5J) including a step of radially deforming each of said edges (70A-70J) so that each of said edges (70A-70J) forms a part of one of said projections (5A-5J).

15. A method according to any one of claims 11 to 14, **characterized in that** said step of making a plurality of openings (7A-7J) is performed by an operation of laser cutting the corresponding shell.
